(19) Europäisches Patentamt

European Patent Office

Office européen des brevets

(11) **EP 4 528 555 A1**

## (12) EUROPEAN PATENT APPLICATION

(43) Date of publication:
**26.03.2025 Bulletin 2025/13**

(21) Application number: **23198860.1**

(22) Date of filing: **21.09.2023**

(51) International Patent Classification (IPC):
**G06F 18/21** (2023.01)     **G06N 3/0464** (2023.01)
**G06N 5/045** (2023.01)

(52) Cooperative Patent Classification (CPC):
**G06V 10/82; G06N 3/0464; G06N 5/045;
G06V 10/26**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Mobility GmbH
81739 München (DE)**

(72) Inventors:
• **Sieberichs, Christian
  40470 Düsseldorf (DE)**
• **Geerkens, Simon
  40476 Düsseldorf (DE)**
• **Waschulzik, Thomas
  85354 Freising (DE)**

(74) Representative: **Siemens Patent Attorneys
Postfach 22 16 34
80506 München (DE)**

## (54) ASSESSMENT OF MACHINE-LEARNING ALGORITHM

(57) Techniques are disclosed that enable assessment of the processing of datasets in a machine-learning algorithm such as a deep convolutional neural network. Layer-based assessment is possible. The processing of images can be assessed. Explainable artificial intelligence is possible. Safe control of autonomous vehicles is possible.

FIG 6

700

EP 4 528 555 A1

**Description**

TECHNICAL FIELD

Various examples of the disclosure pertain to enabling and implementing assessment of a deep neural network algorithm or another machine-learning algorithm comprising a pipeline of multiple layers.

TERMINOLOGY

Independent of the grammatical term usage, individuals with male, female or other gender identities are included within the term.

BACKGROUND

The number of application fields and use cases which employ machine-learning algorithms - e.g., deep neural networks (or simply neural networks) - is widely increased over the past few years.

For example, in the context of autonomous control of trains, neural networks can be used for a variety of tasks such as object detection, segmentation of objects of a certain type, track monitoring, and predictive maintenance.

For example, object detection can be used to identify obstacles or other trains on the tracks, while track monitoring can be used to detect defects in the tracks or to monitor the condition of the train as it travels along the rails. A segmentation mask can be output that segments objects of a certain type in an input image. Predictive maintenance can be used to predict when components of the train might fail, allowing for proactive maintenance to be scheduled before a breakdown occurs.

Neural networks are generally well-suited for these tasks because they are able to process large amounts of data quickly and can learn complex patterns and relationships within the data. This allows them to make accurate predictions and decisions based on real-time data from the train's sensors and other sources.

Due to the complexity of neural networks, it is not always possible to understand why the neural network makes a certain prediction. Oftentimes, a deep neural network is treated as a black box. This similarly applies to other types of machine-learning algorithms.

SUMMARY

There is a need for advanced techniques of assessing neural network and other types of machine-learning algorithms. There is, in particular, a need for monitoring predictions made by neural networks and other types of machine-learning algorithms during inference.

This need is met by the features of the independent claims.

A computer-implemented method of enabling assessment of processing of a plurality of a datasets in a machine-learning algorithm according to claim 1 is provided.

A processing device comprising a processor and a memory is provided. The processor is configured to load program code from the memory and to execute the program code. The processor, upon executing the program code, is configured to perform the method according to claim 1.

A computer program includes program code that is executable by a processor. The processor, upon executing the program code, is configured to perform the method according to claim 1.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a processing device according to various examples.

FIG. 2 schematically illustrates a low-dimensionality plot of a position of input datapoints in a high-dimensionality input space and further illustrates associated classification labels according to various examples.

FIG. 3 is a flowchart of a method according to various examples.

FIG. 4 schematically illustrates a histogram plot of a data structure according to various examples.

FIG. 5 schematically illustrates a segmentation mask overlaid to an input image, as well as a region of the input image that is associated with low prediction accuracy of the neural network that is configured to determine the segmentation mask according to various examples.

FIG. 6 schematically illustrates a data structure with highlighted receptive fields according to various examples.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), a tensor processing unit

(TPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques that facilitate assessment of multiple datasets that are characteristic of a prediction made by a machine-learning algorithm (e.g., a neural network to which reference will be primarily made) will be disclosed. The datasets are input-output datasets, i.e., each dataset includes a pair of an input datapoint and an output datapoint.

The input datapoints of the multiple datasets are patches of predefined size of input data of an intermediate layer. Patches can vary in size from 1x1 pixel to the size of the input data. Accordingly, the input data is obtained by processing root data (i.e., corresponding to the input to the machine-learning algorithm) using an input layer and optionally one or more upstream intermediate layers of the machine-learning algorithm (i.e., arranged upstream along the processing pipeline form by the multiple layers of the machine-learning algorithm). The intermediate layer can also be referred to as hidden layer.

Hereinafter, reference will be made to neural network algorithms, but the techniques may be equally applicable to other types of machine-learning algroithms.

A hidden or intermediate layer of a neural network is a layer of nodes (also known as neurons) in between the input layer and the output layer, where the nodes are not directly connected to the external environment. The hidden layer receives inputs from the previous layer (either the input layer or a previous hidden layer) and applies a set of learned transformations to these inputs, generating an output that is then passed to the next layer in the network.

The patches can be, in other words, a subfraction of the entire input data of the intermediate layer. Thus, the dimensionality of an input datapoint is smaller than the dimensionality of the entire input data of the intermediate layer (and likewise for the output data). Various techniques are based on the finding that high dimensional input datapoints and output datapoints can be difficult to process. This is due to the curse of high dimensionality. As a general rule, the curse of high dimensionality is a phenomenon that occurs when datapoints having a large number of features. In high-dimensional spaces, the number of possible combinations of features grows exponentially with the number of dimensions, making it increasingly difficult to separate signal from noise or to find meaningful patterns in the data. Some of the challenges that arise in high-dimensional datapoints include: Sparsity: As the number of dimensions increases, the number of features required to accurately represent each datapoint grows exponentially. Computational complexity: The time and memory required to process and analyze the datapoints can become prohibitively large as the number of dimensions increases. Overfitting: In high-dimensional spaces, it becomes easier to fit a model to noise rather than signal, leading to poor generalization performance. Visualization: It becomes difficult to visualize high-dimensional datapoints and to identify meaningful patterns or relationships among the features. In particular, for higher dimensional datapoints, distances in the respective input space and output space - cf. Eq. 1 - do not significantly differ between datapoints. Accordingly, using patches of a predefined size of the input data to the intermediate layer (rather than to the entire input data of the intermediate layer), the dimensionality can be reduced and the analysis becomes more discriminative.

Output datapoints of the plurality of datasets are elements of output data obtained at an output layer of the neural network. Alternatively or additionally, the output datapoints can also put into respective ground truth.

Specifically, the output datapoints can pertain to single features of the output data of the output layer. For instance, in such example, where a segmentation mask having a size of 100x100 is output, then there can be 10.000 output datapoints, each having a binary value of "1" (i.e., included in the segmentation mask) or "0" not included in the segmentation mask. Thus, there are many output datapoints, but each output datapoint has a single feature.

The dimensionality of the output datapoints - that are elements of the output data obtained at an output layer of the neural network - is also smaller than the dimensionality of the entire output data of the output layer. The output datapoints are chosen so as that they depend on the input datapoints. I.e., it is considered which fraction of the output data at the output layer is affected by a specific input datapoint; and the output datapoints are accordingly selected so that the respective dependency of the processing paths through the neural network are considered.

Accordingly, it is possible to assess the neural network with respect to how the input-output datasets are being processed. The datasets define data that is encountered along different points of a processing pipeline of the neural network.

Various types of neural networks can be assessed using the techniques disclosed herein. For instance, neural networks solving classification tasks can be assessed. It would also be possible to assess neural networks that solve regression tasks. For instance, convolutional neural networks can be assessed that include one or more convolutional layers. In particular, neural networks can be assessed that solve image segmentation as classification task. Here, an image is divided into multiple segments or regions, each of which corresponds to a different object or part of the image. For instance, a segmentation mask can be defined that takes different values for different pixels of the image, thereby identifying whether a certain segment of the image is part of the target structure to be segmented or not. Segmentation tasks can be implemented using convolutional neural networks. One particular neural network architecture that can be employed is the U-Net architecture. The U-Net architecture includes two parts: a coder and a decoder. The encoder is a series of convolutional and pooling layers that downsample the input image, while the decoder is a series of convolutional and upsampling layers that upsample the encoded image to the original resolution. The architecture is called "U-Net" because the encoder and decoder are connected by a U-shaped pathway. Specifically, the encoder gradually reduces the spatial dimensions of the input image, while increasing the number of channels. The decoder then reverses this process by upsampling the encoded image and reducing the number of channels. One of the key features of the U-Net architecture is the use of skip connections, which connect corresponding layers in the encoder and decoder. These connections allow the decoder to access features from earlier layers in the encoder, which can help to preserve spatial information and improve segmentation accuracy.

It can be assessed with the neural network makes a certain prediction. This can be referred to as "explainable artificial intelligence (XAI)". XAI is particularly important in situations where the output of an AI system can have significant consequences, such as control of a technical system based on predictions made by the neural network, e.g., for control of autonomous trains. In these domains, it is important to be able to understand how an AI system arrived at a particular decision or prediction, and to be able to verify that the system is making decisions that are fair, unbiased, and consistent with human values.

Next, aspects are disclosed that enable determining a data structure that practically enables the assessment of the neural network. Accessing the data structure facilitates XAI techniques. The data structure is determined by comparing multiple datasets with each other. This is explained in detail hereinafter.

Consider a pair of datasets. Based on the distance in input space between the input datapoints and the distance in output space of the output datapoints, this particular pair of datasets can be associated with one of four different sets.

To make this association, an input distance threshold $\delta_{in}$ as well as an output distance threshold $\delta_{out}$ is used. The distance in input space is compared to the input distance threshold; the distance in output space is compared against the output space distance threshold.

In some examples, it would also be possible that such distance thresholds are at least partly predefined.

Then, it is possible that a first neighborhood criterion defines equal pairs of input datapoints in the input space. This would mean that the distance in the input space is not larger than the input space distance threshold. Alternatively, it would also be possible that the first neighborhood criterion defines unequal pairs of input datapoints in the input space; here, the distance of the input datapoints in the input space would be larger than the input space distance threshold.

Because the first neighborhood criterion operates in the input space, it will be referred to as input-space neighborhood criterion, hereinafter.

The input space corresponds to the input to a certain intermediate layer of the neural network, as explained above.

Likewise, for the output space, a second neighborhood criterion may define unequal pairs of output datapoints in the output space; which would correspond to the output space distance between the output datapoints being larger than the output space distance threshold. It would also be possible that the second neighborhood criterion defines equal pairs of output datapoints in the output space so that the output space distance between the two output datapoints of the pair of datasets is not larger than the output space distance threshold.

Because the second neighborhood criterion operates in the output space, it will be referred to as output-space neighborhood criterion, hereinafter.

This is summarized by the equations reproduced below. Here, $P$ notes the plurality of datasets; $P^2$ denotes the set of pairs of datasets that can be formed based on the plurality of datasets; $B_1$ and $B_2$ defines individual datasets selected from the plurality of datasets and B defines a pair of specific datasets $(B_1, B_2)$ consisting of two datasets $B_1$, $B_2$. The corresponding four sets are summarized below and correspond to the four possible combinations of the input-space neighborhood criterion (defining either equal or unequal pairs of input datapoints) and the output-space neighborhood criterion (defining either equal pairs or unequal pairs of output datapoints). ECS stands for equivalent class set and EE stands for equal equal, EU for equal unequal, UE for unequal equal, and UU for unequal unequal.

$$ECS\_EE(P) = \{B | B \in P^2 \wedge d_{RE}(B) \leq \delta_{in} \wedge d_{RA}(B) \leq \delta_{out}\}$$

$$ECS\_EU(P) = \{B | B \in P^2 \wedge d_{RE}(B) \leq \delta_{in} \wedge d_{RA}(B) > \delta_{out}\}$$

$$ECS\_UE(P) = \{B | B \in P^2 \wedge d_{RE}(B) > \delta_{in} \wedge d_{RA}(B) \leq \delta_{out}\}$$

$$ECS\_UU(P) = \{B | B \in P^2 \wedge d_{RE}(B) > \delta_{in} \wedge d_{RA}(B) > \delta_{out}\}$$

$$(1)$$

For example, a Euclidean distance metric or another distance metric may be used in Equation 1.

As a general rule, in the disclosure, distances and input space and/or the output space can be calculated on the same metric. For instance, a Euclidean distance metric may be used.

Such ECS formalism is also disclosed in Waschulzik, Thomas.

Qualitatsgesicherte effiziente Entwicklung vorwärtsgerichteter künstlicher Neuronaler Netze mit überwachtem Lernen: (QUEEN). (ISBN 3-8311-1386-6) 1999, chapter 4.5.1, the disclosure of which is incorporated by reference in its entirety; here the name MR_UU, MR_UG, MR-GG, and MR_GU was used.

Various techniques disclosed herein are based on the construction of particular data structures that help to quickly and comprehensively assess multiple datasets, even where the count of the datasets is large, e.g., larger than 100 or larger than 10,000 or even larger than 1,000,000. In particular, this data structure is based on a classification of pairs of datasets in accordance with the ECS formalism described by Equation 1. The respective information is aggregated across the multiple datasets in the data structure. Information associated with each data structure can thus be quickly compared against respective information associated with the remaining data structures.

This is further based on a binning/histogram approach where a classification of each data structure that is based on the ECS formalism is assigned to one or more predetermined bins, so as to make information of different data structures comparable.

Various techniques disclosed herein construct a data structure based on a combined consideration of neighborhood criteria defined in the input space at the output space, respectively: The data structure collects such fulfillment information for the various pairs of input and output datapoints.

It is not always required to consider all possible combinations / pairs datasets - which would lead to extremely large sizes of the data structure and significant computational resources required for constructing the data structure.

More specifically, it would be possible to (only) consider pairs of datapoints defined by certain neighborhoods in the input space. For example, it would be possible to consider a given dataset of the plurality of datasets and then, for that dataset, determine an (ordered) sequence of predefined length, this sequence including further datasets that are progressively selected from the plurality of datasets based on a distance of their input datapoints to the input datapoint of the given dataset.

Thus, first sequence entry would correspond to the dataset that has the nearest neighbor input datapoint to the input datapoint of the given dataset; the second entry in the sequence would correspond to the dataset having the input datapoint that is the second nearest neighbor to the input datapoint of the given dataset; and so forth.

Due to the predefined length, the computational complexity of constructing the dataset and the size of the dataset is limited. At the same time, sufficient information can be collected for each dataset which is characteristic for its relationship to the other datasets. This makes it also possible to construct the data structure during inference for the purpose of monitoring operation of the neural network.

Based on the data structure it can be checked for each pair of datasets, i.e., for the given dataset and each dataset in that sequence, whether the respective pair of input datapoints fulfills the input-space neighborhood criterion; and whether the respective pair of output datapoints fulfills the output-space neighborhood criterion, i.e., equal or unequal pairs of input datapoints as well as equal or unequal pairs of output datapoints. For each sequence entry of the sequence, it would then be possible to determine a fraction of all sequence entries up to that sequence entry that fulfill both neighborhood criteria. I.e., in other words, it is possible for each dataset of the plurality of datasets and for each sequence entry of the respective sequence to determine a respective cumulative fulfillment ratio. The cumulative fulfillment ratio is based on how many of the further datasets included in the sequence up to the respective entry cumulatively fulfill both the input-space neighborhood criterion, as well as the output-space neighborhood criterion.

The data structure can be structured to enable such checking, e.g., as tree (e.g., AVL tree, B, B*-tree), hashing, or using an annoy algorithm (Spotify, 2016). Such techniques are based on the finding that it is possible to simplify combinations of two entries in the data structure. Each combination of entries requires computational resources at the number of possible combinations increases quadratically with the number of datapoints. Thus, also the computational resources required would increase quadratically. To mitigate this, the importance of certain combinations of entries of the data structure can be preemptively determined, e.g., using search trees or sorting methods or can be estimated. One respective option is the annoy algorithm. There are different options available for expressing the cumulative fulfillment ratio. For instance, the cumulative fulfillment ratio can be 100% or 0% for the first entry, depending on whether the first entry in the sequence fulfills, cumulatively, both the input-space neighborhood criterion as well as the output-space neighborhood criterion. Then, for the second entry, the cumulative fulfillment ratio can be 0%, 50% or 100%, depending on whether neither the first entry nor the second entry fulfills cumulatively the first and output-space neighborhood criterion (0%), only one of the first and second entry fulfills cumulatively the first and second neighborhood criteria (50%), or whether both the first and second sequence entry fulfill, cumulatively, the first and second neighborhood criteria (100%).

Instead of such a relative expression of the cumulative fulfillment ratio also an absolute expression would be conceivable. For instance, for each sequence entry that fulfills, cumulatively, both the first and second neighborhood criteria, the cumulative fulfillment ratio may be implemented by a fixed absolute predetermined number, e.g., 1. In such an example, the cumulative fulfillment ratio for the first entry can be either 0 or 1, depending on whether the input datapoints associated with the first sequence entry fulfill, cumulatively, the input-space and output-space neighborhood criteria; the cumulative fulfillment ratio for the second sequence entry can be either 0, 1 or 2, depending on whether the first and second sequence entry both do not define cumulatively the input-space and output-space neighborhood criteria (0), one of the sequence entries fulfills cumulatively the first and second neighborhood criteria (1), or whether both the first and second sequence entry fulfill the first and second neighborhood criteria cumulatively (2).

It is then possible to determine the data structure that stores such fulfillment information. The data structure can provide a binning of the cumulative fulfillment ratios depending on the neighborhood size (i.e., the sequence position).

The data structure can be an array, e.g., an n-dimensional array with $n = 2$. The data structure can also be structured as a tree data structure. Hereinafter, examples will be described in connection with an implementation of the data structure as array, but similar techniques can be readily applied for other implementations of the data structure. A first (array) dimension of the data structure can then resolve along the sequences that are determined for each of the plurality of datasets (e.g., k-nearest neighbors) or be based on another distance measure. While a second (array) dimension of the data structure resolves the cumulative fulfillment ratio. Each entry of the data structure can include a count of datapoints that are associated with a respective fulfillment ratio at the respective sequence entry defined by the position along the first array dimension and the second array dimension.

As a general rule, the term "first array dimension" or "second array dimension" is not to be construed to correspond to the specific computational / programming index assigned at source code level to the respective dimension of the data structure; but to simply denote different array dimensions (assigned arbitrary computational / programming indices). Thus, the first array dimension may also be simply termed "array dimension" and the second array dimension may also be simply termed "further array dimension".

To give a concrete example: for a position associated along the sequences that define the second nearest neighbor (i.e., second sequence entry) it could be checked how many datasets of the plurality of datasets have a cumulative fulfillment ratio of 0 (first bin), 1 (second bin), or 2 (third bin).

According to various examples, it would be possible that multiple such data structures are determined for different parametrizations of the input-space neighborhood criterion and/or different parameterizations of the output-space neighborhood criterion. For instance, multiple such data structures may be determined for different settings of the input space distance threshold and/or the output space distance threshold. For further illustration, multiple such data structures may be determined for two or more of: ECS_UU, ECS_UE, ECS_EU, ECS_EE.

Alternatively or additionally, multiple data structures can be determined for multiple intermediate layers of the neural network. The data structures can be determined for two or more layers of the neural network.

The data structure or data structures determined based on the ECS formalism as disclosed above is a powerful tool for assessing a neural network by identifying exceptional pairs of input datapoints and output datapoints amongst the plurality of datasets. Based on the data structure, operation of the neural network can be monitored. The data structure can be accessed and analyzed to determine whether a prediction made by the neural network is reliable.

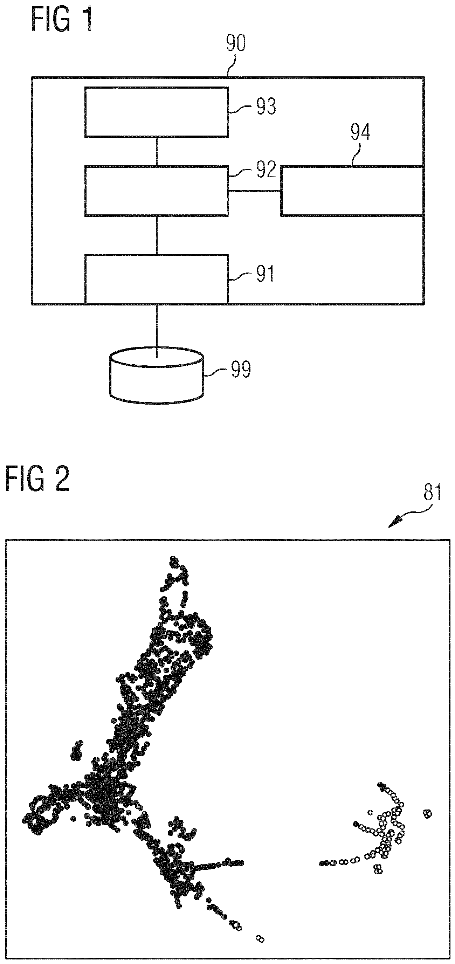

FIG. 1 schematically illustrates a computing device 90 according to various examples. The computing device 90 could be a personal computer or a server. The computing device 90 includes a processor 92 in the memory 93. The computing device 90 also includes a communication interface 91. The processor 92 can load, via the communication interface 91, a plurality of datasets from the database 99. The plurality of datasets could also be retained in a local memory 93.

The processor 92 can load program code from the memory 93 and execute the program code. The processor, upon loading and executing the program code can perform techniques as disclosed herein, e.g.: enabling assessment of a plurality of datasets; enabling assessment of a neural network; determining a data structure based on cumulative fulfillment of neighborhood criteria defined, both, in the input space and the output space of the datasets; controlling a human machine interface (HMI) 94 to output a plot based on the data structure; monitoring operation of a neural network during inference based on the data structure; etc..

FIG. 2 is a schematic illustration of an example collection of datasets. FIG. 2 is a two-dimensional plot of the high dimensional datapoints. The plot of FIG. 2 is created using the UMAP algorithm. UMAP (Uniform Manifold Approximation and Projection) algorithm is a dimensionality reduction technique used for data visualization and exploration. It is designed to preserve both the global and local structure of high-dimensional datapoints in a low-dimensional space. Instead of UMAP other dimensionality-reduction algorithms may be generally used.In detail, FIG. 2 illustrates the position of input datapoints in an input space. Also illustrated is a respective class of output datapoints that are associated with each of the input datapoints (i.e., the label assigned). The position of the input datapoints in the input space is illustrated in two dimensions, i.e., depends on the XY position in the reduced dimensionality plot of FIG. 2. The "position" of the output datapoints is illustrated by the bold or thin circles. Bold circles correspond to a first classification (e.g., train track) and narrow circles correspond to a second classification (e.g., no train track).

In still further detail, the input datapoints are patches of a predefined size of input data of an intermediate layer of the neural network. The input data is obtained by processing root data - e.g., an image of a front facing camera of a train - using the input layer of the neural network and optionally one or more upstream intermediate layers of the neural network. In the example of FIG. 2, the considered intermediate layer is the third convolutional layer of a sequence of multiple convolutional layers of a neural network having U-Net architecture. The output datapoints specify whether regions in the input image that are processed by the neural network in the upstream layers to obtain the respective input datapoints depict a train track or do not depict a train track (i.e., the neural network is trained to perform a train track- no train track classification).

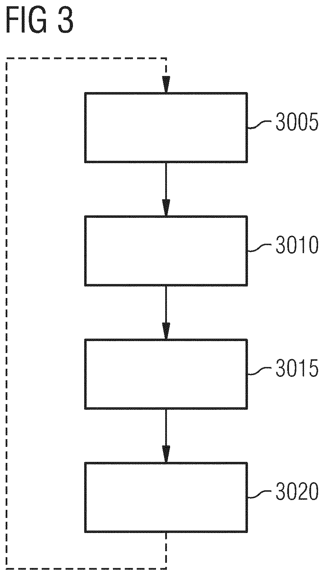

According to various examples, the plurality of datasets illustrated in FIG. 2 can be processed to determine a data structure that captures spatial relationships between the input datapoints and the output datapoints. Then, this data structure can be accessed and analyzed to assess the neural network. An example technique to construct the data structure then to access the data structure to assess the neural network are illustrated in connection with FIG. 3.

FIG. 3 is a flowchart of a method according to various examples. FIG. 3 generally pertains to assessing a plurality of datasets. The method of FIG. 3 enables to assess a neural network.

The method of FIG. 3 can be executed by a processing device. The method of FIG. 3 can be executed by a processor upon loading and executing program code that is stored in a memory. For example, the method of FIG. 3 can be executed by the processor 92 upon loading and executing program code that is stored in the memory 93 (cf. FIG. 1).

At box 3005, a plurality of datasets is obtained.

Obtaining the plurality of data sets can include loading the plurality of data sets from a memory or database. Obtaining the plurality of data sets can also include obtaining the plurality of data sets from a neural network such as a U-Net convolutional neural network. Obtaining the plurality of data sets at box 3005 can include determining each data set of the plurality of data sets.

For instance, the neural network can include a breakout point; at this breakout point, the input feature map of a respective intermediate layer is provided and the input datapoints are determined based on the feature map. Also, the output of the neural network can be used in order to determine the output datapoints.

Hereinafter, details with respect to the input datapoints are described. The input datapoints are determined based on patches of a predefined size of the input data of the intermediate layer of the neural network. In detail, a set of features is obtained as output data of a given intermediate layer. The output data of the given intermediate layer is obtained by sliding a filter kernel having a certain size across the input data of the intermediate layer. The patches can have a predefined size that is equal or smaller as receptive fields defining all regions that have a possible impact onto an output datapoint.

The output datapoints are elements of the output data obtained at the output layer of the neural network. For example, they can pertain to pixel-wise classification of pixels of an input image. They can pertain to ground-truth labels.

For instance, train tracks can be segmented in the input image; in such a scenario, the output datapoints can indicate whether a certain pixel or a set of pixels in the input image is within or outside of a respective segmentation. In another example, the output datapoints can pertain to classification of objects that are detected in the input image; in such a scenario, the output datapoints can specify a respective object label.

The input datapoints are such patches of a selected intermediate/hidden layer of the neural network that have an impact on the respective output datapoint of a given dataset. This is defined by the respective sequence of receptive fields along the intermediate layers of the pipeline.

The receptive field of a feature at a given layer of the neural network refers to the area of the input space to that layer that a particular feature is looking at or "receptive" to. In other words, it is the region of the input that influences the activation of that feature. The receptive field of a feature typically increases as the depth of the layer increases.

Simply speaking, if the receptive fields have limited size, then a pixel in the upper left corner of an image will not have an impact on the classification result of a pixel in the lower right corner of the image. This is because the receptive fields along the pipeline of layers of the neural network, tracing back from the respective pixel in the output, do not include the pixel in the input image.

Typically, the size of the respective fraction of the input data to a certain intermediate layer of the neural network that has an impact onto a certain element/feature of the output data of the neural network increases for layers that are further away from the output layer, i.e., arranged upstream along the respective processing pipeline. I.e., the largest patches that are required to be processed or present for the most upstream intermediate layers of the neural network. This is explained in TAB. 1 below. Here, a neural network has been trained to detect train tracks. In other words, the neural network provides output data that indicates, for each input pixel or set of input pixels of the input image, whether the respective pixel or set of input pixels belongs to a train track or does not belong to a train track. The neural network includes multiple layers along a processing pipeline. These multiple layers have different types. For instance, amongst the multiple layers there are convolutional layers that perform a convolution between the respective input data to the convolutional layer and a predefined kernel (obtained from training). As explained above, the output datapoints are individual entries of the output vector, i.e., correspond to, e.g., labels assigned as ground-truth to individual pixels or sets of pixels in the input data pertaining to track or no train track classification.

The input data to each convolutional layer can be structured into receptive fields. For instance, receptive fields can be determined that have an impact on a certain output datapoint. I.e., different receptive fields affect different output datapoints. There can be an overlap between receptive fields that affect neighboring output datapoints. It would be possible to form the input datapoints by selecting, from the entire input data of a given layer, fractions of the input data in accordance with patches such that different input datapoints have an impact on different output datapoints. I.e., the size of the patches is smaller or equal than the size of the receptive fields. The receptive field size having an impact on a given output datapoint is shown in the middle column of table 1. The actual patch size that has been proven to be efficient in terms of calculation of the data structure and avoiding undiscriminated results due to the occurrence of high dimensionality shown in the right column of table 1. As is apparent from a comparison of the middle column of TAB. 1 with the right column of TAB. 1, the actual dimensionality of the input datapoints (defined by the patch size) stays below the maximum meaningful dimensionality of the input datapoints (defined by the receptive field size). Such reduction of the dimensionality of the input datapoints below the actual receptive field of the neural network affecting a certain output datapoint is supported by the finding that within each maximum patch - defined by the maximum receptive field in the respective layer affecting a certain output datapoint - the center region has a significant higher impact onto the output datapoint than edge regions within that receptive field.

TAB. 1: Examples of sizes of patches (right column) used for forming input datapoints, for different intermediate layers (all convolutional layers) of a neural network having U-net architecture. Upstream layers are shown at the top; downstream layers at the bottom. These are only examples of how different sizes of patches can be used for different neural networks.

| Layer | Size of the receptive field (i.e., maximum patch size) of each output datapoint | Actual patch size used for determining input datapoints (smaller than maximum patch size) |
|---|---|---|
| Conv-Layer1 (input layer) | 204*204 | 35*35 |
| Conv-Layer2 | 202*202 | 31*31 |
| Conv-Layer3 | 202*202 | 29*29 |
| Conv-Layer4 | 200*200 | 29*29 |
| Conv-Layer5 | 100*100 | 27*27 |
| Conv-Layer6 | 98*98 | 25*25 |

(continued)

| Layer | Size of the receptive field (i.e., maximum patch size) of each output datapoint | Actual patch size used for determining input datapoints (smaller than maximum patch size) |
|---|---|---|
| Conv-Layer7 | 49*49 | 21*21 |
| Conv-Layer8 | 46*46 | 19*19 |
| Conv-Layer9 | 22*22 | 13*13 |
| Conv-Layer10 | 20*20 | 11*11 |
| Conv-Layer11 | 9*9 | 7*7 |
| Conv-Layer12 | 7*7 | 5*5 |
| Conv-Layer13 | 9*9 | 7*7 |
| Conv-Layer14 | 7*7 | 5*5 |
| Conv-Layer15 | 8*8 | 7*7 |
| Conv-Layer16 | 6*6 | 5*5 |
| Conv-Layer17 | 7*7 | 7*7 |
| Conv-Layer18 | 5*5 | 5*5 |
| Conv-Layer19 | 5*5 | 5*5 |
| Conv-Layer20 | 3*3 | 3*3 |
| Conv-Layer21 (output layer) | 1*1 | 1*1 |

At box 3010, once the datasets including the input and output datapoints have been determined, one or more data structures are determined/constructed based on the datasets. The datasets are analyzed for this purpose.

For instance, it would be possible to determine four data structures, a first data structure being based on the combination of a input-space neighborhood criterion and a output-space neighborhood criterion defined in input space and output space, respectively, in accordance with the $ECS_{UU}$; and/or a second data structure could be determined for a input-space neighborhood criterion and a output-space neighborhood criterion in accordance with the set $ECS_{UE}$; and/or a third data structure can be determined for $ECS_{EE}$; and/or a fourth data structure can be determined for $ECSE_{EU}$. I.e., the input-space neighborhood criterion can define unequal pairs of input datapoints in the input space or equal pairs of input datapoints in the input space; and likewise, the output-space neighborhood criterion can define equal pairs of output datapoints or unequal pairs of output datapoints in the output space. For all four combinations it would be possible to determine respective data structures; it would also be possible to determine only a single data structure or fewer than four data structures for selected combinations of the first and second neighborhood criteria.

"Unequal" datapoints means that the datapoints have a distance above a threshold in the respective space using a certain metric (various metrics are possible, as a general rule); "Equal" means they have a distance below the threshold.

It would also be possible to determine multiple data structures for different parameterizations of the neighborhood criteria. For instance, even for a given neighborhood criterion defining unequal or equal pairs of datapoints in either the input space or output space, it would be possible to select different distance thresholds (i.e., $\delta_{in}$ or $\delta_{out}$ in the Equation 1).

Alternatively or additionally, it would also be possible to determine multiple data structures based on different collections of datasets. It would be possible to determine different collections of datasets for different layers. Then, for each layer, one or more data structure can be determined based on the respective collection.

Now, considering a certain data structure determined for a given layer that uses a certain input-space neighborhood criterion and a certain output-space neighborhood criterion. This data structure is determined as follows. First, for each dataset of the plurality of datasets, a respective sequence of a predefined length is determined. The respective sequence includes further datasets that are progressively selected from the plurality of datasets based on a distance of their input datapoints to the input datapoints of the respective dataset. I.e., a loop iterating through all datasets can be determined and for each dataset, e.g., the K-nearest neighbors could be selected in an ordered fashion.

Then, for each dataset of the plurality of datasets it is possible to determine whether the input datapoint of the respective dataset and the input datapoints of each one of the further datasets included in the respective sequence respectively fulfill the considered input-space neighborhood criterion that is defined in the input space. Likewise, for each dataset of the plurality of datasets it is possible to determine whether the output datapoint of the respective dataset and the output datapoints of each one of the further datasets included in the respective sequence respectively fulfill an output-space neighborhood criterion that is defined in the output space. Such information can then be denoted by means of the respective cumulative fulfillment ratio. This means that for each dataset of the plurality of datasets and for each sequence entry of the respective sequence it would be possible to determine a respective cumulative fulfillment ratio based on how many of the further datasets included in the sequence up to the respective entry fulfill, both, the input-space neighborhood criterion as well as the output-space neighborhood criterion. Then, the data structure can be determined. The data structure can be an array form. Each array entry can correspond to a respective bin. The bins can be defined along a first array dimension and along a second array dimension. The first array dimension the data structure can resolve the sequences determined for each one the plurality of datasets. The second array dimension of the data structure can resolve the cumulative fulfillment ratio. Then, each entry of the data structure includes a count of datapoints that are associated with the respective cumulative fulfillment ratio at the respective sequence and redefined at a position along the first array dimension and the second array dimension. I.e., it can be checked across all of the plurality of datasets how many of those datasets for a given position along the first array dimension have a corresponding cumulative fulfillment ratio associated with that bin. The bins can be determined based on the k-nearest neighbor technique or another distance measure and optionally using appropriate scaling, e.g., exponential or logarithmic scaling.

It would be optionally possible that each entry of the data structure further includes an identification of the datasets that are associated with the respective cumulative fulfillment ratio at the respective sequence entry defined by the position along the first array dimension and the second array dimension. For example, a unique ID of each dataset may be stored, i.e., pointers to the respective datasets.

By means of such identification it then becomes possible to individually select or highlight those datasets that contribute to a corresponding bin in the data structure. For instance, it would be possible to select all those datasets that have a certain given cumulative fulfillment ratio (e.g., "5" or "50%") at the tenth sequence entry. This is just an example and other selection types are possible.

Thus, beyond the histogram aspect to the data structure that is given by the aggregated count of data structures that have respective cumulative fulfillment ratios at a given bin, also individual datasets can be resolved by means of such identification. Such identification of the datasets makes it possible to conveniently switch from a global assessment of the plurality of datasets to a local assessment of individual ones of the datasets. In other words, in a global view it would be possible to identify certain subsets of datasets that share certain properties by selecting the appropriate bins of the array; and then an individual assessment of the datasets can be used to identify properties that led to such binning of the datasets. For instance, quality control can be executed on a local level to check whether the labels are correctly assigned to certain datasets. It can be checked whether in relation to certain datasets further datasets will be required to augment the training data, etc.

According to various examples, it would be possible to save the one or more data structures for later use. It would also be possible, alternatively or additionally, to commence at box 3015.

At box 3015, the data structure is accessed to assess neural network that processes the input datapoints to obtain the output datapoints.

It is possible to determine a plot of the data structure. Here, a contrast of plot values of the plot is associated with the count of the datapoints. For instance, the more datasets are counted in a certain bin, the darker a respective plot value can appear. The first axis of the plot can resolve the first array dimension and the second axis of the plot can resolve the second array dimension. The plot can then be output via a user interface, e.g., the HMI 94 of the computing device 90.

In some examples, a subfraction of all entries of the data structure can be determined and the plot can be restricted to that subfraction. The subfraction can be determined based on a context, e.g., the type of the data sets or an information content of the data sets. For instance, the rule or rules to select the subfraction can be provided in a database and/or can be determined based on appropriate algorithms. For instance, for an application in trains, the subfraction can depend on a current position and movement direction of the train, and/or a traffic situation and/or climate, whether and/or ambient brightness or ambient illumination. Thereby, the specificity of said assessing can be optimized. It is possible to dynamically select the subfraction upon changes in the context. The context can be monitored and changes in the context can then trigger such reselection.

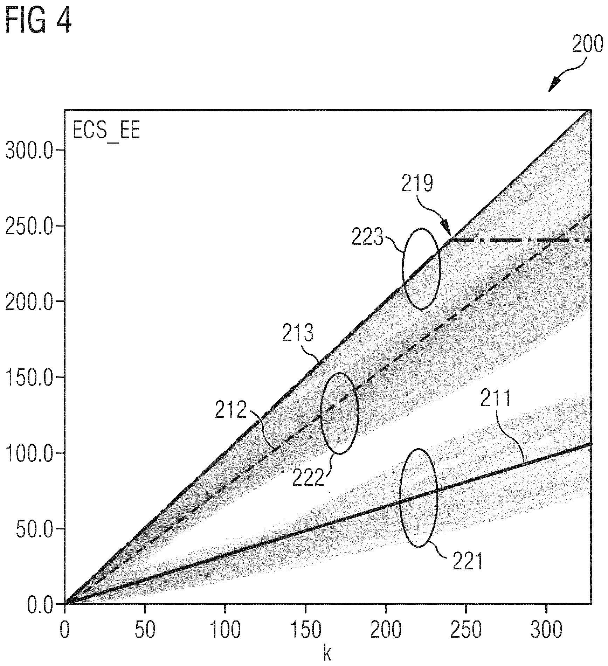

FIG. 4 illustrates an example plot 200 of the data structure. The plot has a first axis (X axis) that equates to the array dimension of the data structure that resolves the sequences determined for each dataset. The plot also has a second dimension associated with the further array dimension of the data structure that resolves the cumulative fulfillment ratios. The grayscale of the plot indicates the count of datasets that have a respective cumulative fulfillment ratio at the respective sequence lengths. Darker (lighter) grayscale indicates a higher (lower) count.

It is noted that while in FIG. 4 the first axis is shown as k-nearest neighbors, also other neighborhood criteria could be considered.

Since plot 200 does not discriminate between individual datasets (but rather illustrates aggregated information, i.e., the count of datasets having a certain cumulative fulfillment ratio at a certain sequence length), the plot 200 corresponds to a histogram depiction of the data structure.

It is not required in all scenarios to create the plot 200 and output the plot 200 to a user. In particular, scenarios are conceivable in which the data structure is accessed during inference in order to assess the neural network during inference. In such a scenario, the accessing and analysis of the data structure can be executed automatically. Nonetheless, it is illustrative to discuss possible characteristics of the data structure that can be subject to such assessment of the neural network based on the visual representation in the plot 200. In particular, one or more dominant traces of the count of datapoints that have a certain cumulative fulfillment ratio for different sequence lengths can be assessed. This is discussed in detail below.

It is possible to identify one or more dominant traces of the count of datapoints that are associated with the respective cumulative fulfillment ratio along the array dimension and the further array dimension. Then, the assessing of the neural network can be based on the shape of each of these one or more dominant traces. In the example of FIG. 4, three dominant traces 221, 222, 223 are identified. The slope of the dominant trace 221 is smaller than the slope of the dominant traces 222 and the slope of the dominant trace 223. Reference shapes 211, 212, 213 are illustrated in FIG. 4 that highlight the dominant traces 221-223.

The reference shape 221-223 can be determined based on a context, e.g., the type of the data sets or an information content of the data sets. For instance, a respective number of reference shapes can be provided in a database and/or can be determined based on appropriate algorithms. For instance, for an application in trains, the context can depend on a current position and movement direction of the train, and/or a traffic situation and/or climate, whether and/or ambient brightness or ambient illumination. Thereby, the specificity of said assessing can be optimized. It is possible to dynamically select the reference shapes 221-223, upon changes in the context. The context can be monitored and changes in the context can then trigger such reselection.

For example, the reference shape 213 - given the ECS_EE data structure defined for respective neighborhood criteria - would be ideally expected as the primary dominant trace for a segmentation task detecting train tracks: Here, similar input datapoints (having similar outputs) are located in the vicinity of each other in the input space; up to a certain threshold 219 that corresponds to how many pixels are part of a train track. Accordingly, datasets that contribute to the dominant trace that is an agreement with the reference shape 213 can be assumed to be correctly classified by the neural network.

This is in contrast to those datasets that contribute to the dominant traits 221 that is in agreement with the reference shape 211. The reference shape 211 shows only a slow linear increase over small sequence length (and may show an increased increase for a high sequence length; not shown in FIG. 4). Here, datapoints contribute to the respective dominant trace 221 that are wrongly classified by the neural network given a certain classification task of segmentation of train tracks (i.e., a respective segmentation mask is output that has the same dimensionality as the input image and that masks the train tracks). This is because adjacent input datapoints have differing output datapoints; which is not possible for the respective task solved by the neural network, e.g., image segmentation.

The third reference shape 212 (corresponding to the dominant trace 222) is arranged in-between the reference shapes 211 and 213. These are borderline datasets that can be either correctly or wrongly classified, depending on the situation.

As will be appreciated from the above, assessing the neural network can include determining whether the shape of each of the one or more dominant traces 221-223 coincides with the reference shapes 211, 212, 213. Such reference shapes 211-213 can be selected from the group comprising: flat linear increase, steep linear increase, and hockey stick (illustrated by the full line, dashed-dotted line and the dashed line in FIG. 4 respectively). It is also possible to compare the intensities of the dominant traces 221-223 that are observed in the data structure/the plot 200 with each other. I.e., relative intensities can be considered. Here, the expectation is that the dominant trace 223 (corresponding to reliable prediction of by the neural network) has a relatively higher intensity if compared to the dominant trace 221 (corresponding to less reliable prediction by the neural network), at least for downstream layers of the neural network; where the prediction accuracy should be higher than for upstream layers of the neural network. Differently, for upstream neural network layers, it is expected that the relative intensity of the dominant trace 221 - corresponding to falsely classified input datapoints this is relatively higher. In the illustrated scenario of FIG. 4, the dominant traces 221, 222, 223 all have approximately the same absolute intensity; accordingly, their relative intensities are 1:1:1.

For instance, such relative intensities of the dominant traces can be compared with predefined ranges. These predefined ranges can depend on the position of the intermediate layer along the processing pipeline of the neural network that is considered. In other words, it would be possible to check whether the intensity of the dominant trace 223 relative to the intensity of the dominant trace 221 fulfills a certain requirement (e.g., is at least twice as high); wherein this predefined requirement/predefined range can be the selected differently for different layers of the neural network. For instance, it can be requested that the relative intensity of the dominant trace 223 is higher for downstream layers of the neural network and for upstream layers of the neural network. Such assessment becomes possible where multiple data structures are determined for multiple intermediate layers of the neural network. Then, depending on which data structure is accessed to assess the neural network, different predefined ranges for comparison with the relative intensities of the dominant traces can be selected.

Comparing such relative intensities of dominant traces with predefined ranges is only one option for assessing the neural network. Other options are available. For instance, it would be possible to determine a fraction of traces that are incompatible with the predefined reference shapes, i.e., offset and/or arranged away from the dominant traces. Thus, the intensity of the dominant traces can be compared with a background intensity in the data structure. The more undefined traces there are, the less likely the neural network is to provide a reliable prediction.

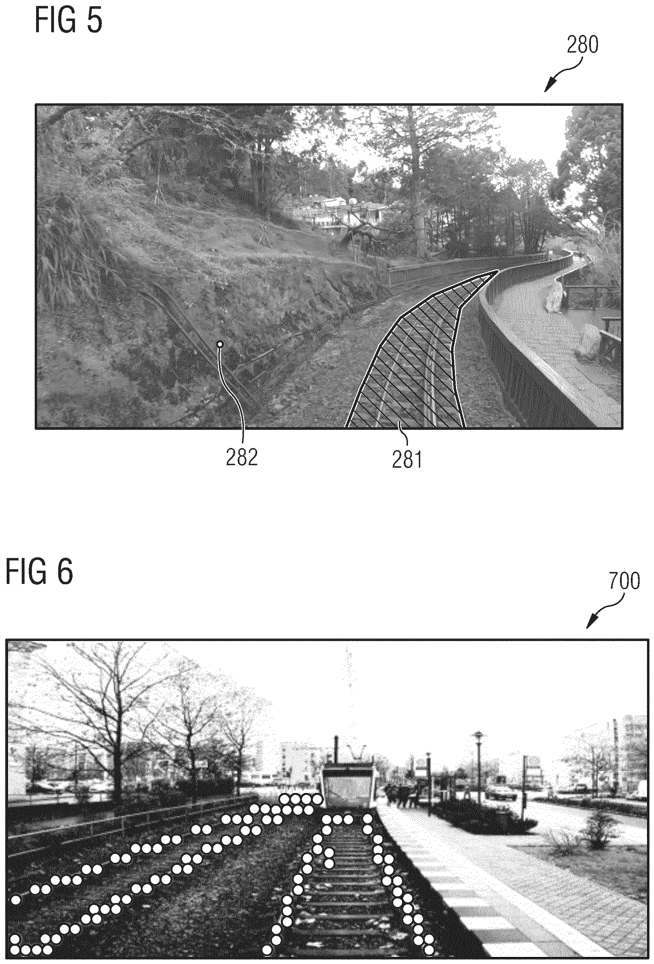

More generally, based on such techniques of considering the histogram nature of the data structure, it is possible to assess the neural network. For instance, it is possible to determine whether an output of the neural network, e.g., a segmentation of "train track - no train track" is reliable. The prediction reliability can be quantified. This can be executed during inference. For example, as illustrated in FIG. 5, an input image 280 can be processed. There is a train track present and the respective segmentation 281 is illustrated. For a certain region 282 of the input image 280 (cf. TAB. 1), the evolution of the cumulative fulfillment ratio for different sequence lengths follows the dominant trace 221, i.e., has the shape 211. This corresponds to a slow linear increase of the ECS_EE values for sequences containing more and more neighbors. Then, it can be judged that the prediction of the neural network for that region 282 is unreliable.

As a general rule, based on said assessing of the neural network (executed during inference), it would be possible to selectively transition a system that is controlled depending on the prediction provided by the neural network into a safe state (cf. FIG. 3: box 3020). For instance, the dominant trace 221 following the reference shape 211 has a relative intensity that is above a layer-dependent threshold, the safe state may be triggered. Here, user interaction may be required or a warning may be output. For instance, a train may be decelerated. This is because it is detected that for the current situation the output of the neural network is comparatively unreliable.

As illustrated above, it is possible to repeat box 3005 - box 3020 for multiple layers of the neural network. Based on the same input to the neural network, multiple layers can be used to form the input datapoints. Then, the respective assessment of the neural network can be executed for each layer, wherein one or more target parameters can depend on the particular layer, e.g., the relative intensities as explained above.

Applying such assessment to multiple layers can be helpful to detect clusters of input datapoints and thereby conclude on the mode of processing input datapoints in the neural network. At the same time, there is the possibility to detect critical and potentially erroneous predictions of the neural network at an early stage during processing of inputs to the neural network. It would be possible to compare whether certain regions of the input to the neural network are part of a dominant trace that has a shape associated with unreliable predictions (cf. FIG. 4: dominant trace 221) for multiple layers. Then, a higher degree of certainty regarding whether the neural network makes a wrong prediction for the respective part of the input can be reached. For instance, the certain datapoint has a trace that slowly increases for ECS_EE for multiple layers of the neural network, difficulties of the neural network to make correct predictions can be detected early on. Complex information can be detected and respective pre-processing. Critical situations can be determined at a higher accuracy and higher reliability.

FIG. 6 illustrates an example representation 700 of an input image forming input data (cf. FIG. 3: box 3005). Based on the processing discussed above in connection with, e.g., FIG. 3, box 3010 a data structure can be constructed for a given intermediate layer. For instance, ECS_EE data structure can be constructed.

FIG. 6 illustrates that it is possible to highlight receptive fields in the representation 700 of the input image based on a selection of one or more entries of the data structure. This can be output via a graphical user interface (GUI). A user can inspect the representation of the data structure output via the GUI and the highlighted receptive fields. The representation 700 can be continuously displayed to a remote operator monitoring the function of the autonomous vehicle, along with helpful information for monitoring the internal state. Several displays can show several aspects of the internal state in parallel.

The data structure, in such an example, includes the position of the receptive fields. Instead of selecting entries in the data structure, it would also be possible to select a certain patch in the input image and then highlight, in a plot of the data structure, the respective entries of the data structure that are associated with the selected patch. Optionally, it would also be possible to highlight respective datapoints or make a respective selection in a dimensionality-reduced plot of the input datapoints of the respective intermediate layer, e.g., using UMAP.

In FIG. 6, a certain part of the data structure is selected that corresponds to train tracks. It would also be possible that - alternatively or additionally - areas are highlighted that have a high uncertainty in the classification. Such information that is determined based on the uncertainty is significantly more sensitive than, e.g., the illustration of the train tracks, because critical drifts or eminent errors can be prospectively detected prior to the actual occurrence of the error and solved. For instance, responsive to detecting eminent errors, a user may in addition, activate the illustration/plot of FIG. 4, to obtain in addition further information on the functionality of the system. It would also be possible to optimize or change the visualization of FIG. 5.

Such cross-diagram illustration as discussed (UMAP or similar, not shown - plot of the data structure, cf. FIG. 4 - input image, cf. FIG. 6) facilitates explanations of the operation of the neural network and, in particular, of the given layer.

Typically, two use cases exist, the assessment of the neural network before deployment and, second, at runtime. At runtime, FIG. 4 is of particular interest, as it can be used to detect the extent to which a datapoint matches stored expectations. If there is any misbehavior, this would be detectable. FIG. 4 is also critical for examining the system to identify, for example, different sets of data. On the other hand, the illustration of FIG. 6 can be helpful to clarify structural relationships of the respective data groups for a user. For example, this example illustrates that the group of isolated and partially misclassified data are all present on the boundary of the route.

Summarizing, techniques have been disclosed that enable to assess a neural network based on a data structure or multiple data structures that have been determined based on cumulative fulfillment ratios of multiple datasets, each dataset including an input datapoint and an associated output datapoint, the input datapoints being based on patches of inputs to an intermediate layer of the neural network. The output datapoints can be determined based on the prediction of the neural network or associated ground truth. The output datapoints are, accordingly, associated with the output of the neural network. Each output datapoint depends on the respective input datapoint of the respective data set. This means that the processing of the part of the input data to the intermediate layer that includes the input datapoint affects the output datapoint. In other words, the input datapoint is arranged inside the receptive field of the output datapoint of the respective data set.

Such data structures can be determined for multiple layers of the neural network. It is generally preferable to determine such data structures for a plurality of such layers, and at least the most downstream layers of the processing pipeline of the neural network.

Then, it can be determined whether dominant traces of the cumulative fulfillment ratios determined for the multiple datasets are present. If no dominant traces are present at all, then no characteristic prediction is encountered and it can be assumed that the neural network works inaccurately. This would be the case if the intensity of a dominant trace having a reference shape equals substantially the background intensity. If dominant traces are encountered that show a linear but slow increase it can also be determined that the prediction of the neural network is unreliable. Ideally, dominant traces are observed that show a hockey stick function, i.e., a speedy increase in the beginning of the cumulative fulfillment ratios and then a flat dependency from a control threshold onwards.

Based on such assessment of one or more dominant traces that are formed by the cumulative fulfillment ratios of the datasets in the data structure can be determined whether the network operates correctly. This can be executed during inference and, if inaccuracies in the operation are detected, then a system that is controlled based on an output of the neural network can be transitioned to a safe state. Alternatively or additionally, an additional training can be triggered. Also, such assessment of one or more dominant traces present in the data structure allows insights into the problem-solving strategy to achieve a prediction in accordance with the trained task of the neural network, i.e., facilitates XAI. This can be based on clusters of input datapoints at the different layers of the neural network. As a general rule one can observe that if a group of individual traces of the cumulative fulfillment ratio across different sequences forms a dominant trace, i.e., has a similar shape, then this is an indication of the similarity between the respective input datapoints regarding the respective prediction solved by the neural network.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, techniques have been disclosed in which a neural network is trained to solve a segmentation task for segmenting train tracks in an input image. However, the particular task solved by the neural network is not germane for the techniques disclosed herein. The techniques disclosed herein can be applied to neural networks solving various tasks including classification and regression task.

For further illustration, techniques have been disclosed in which dominant traces are compared with reference shapes for a data structure that has been determined on the ECS formalism, and in particular the ECS_EE formalism. It is similarly possible to use other ECS neighborhood criteria, e.g., ECS_UU. In such a scenario, the reference shapes will differ.

For still further illustration, techniques have been disclosed in the context of assessing deep neural networks including intermediate layers. Similar techniques can be applied for assessing machine-learning algorithms with stepwise processing of input datasets in different spaces or embeddings.

**Claims**

1. A computer-implemented method of enabling assessment of processing of a plurality of datasets in a machine-learning algorithm, each dataset of the plurality of datasets comprising a respective input datapoint in an input space and an associated output datapoint in an output space,

   wherein the input datapoints of the plurality of datasets are patches of a predefined size of input data of an intermediate layer of the machine-learning algorithm,
   wherein the input data is obtained by processing root data using an input layer of the machine-learning algorithm and optionally one or more upstream intermediate layers of the machine-learning algorithm,
wherein the output datapoints of the plurality of datasets are elements of output data associated with an output layer of the machine-learning algorithm and wherein the output datapoints depend on the input datapoints,
wherein the computer-implemented method comprises:

- for each dataset of the plurality of datasets:
determining a respective sequence of a predefined length, the respective sequence including further datasets progressively selected from the plurality of datasets based on a distance of their input datapoints to the input datapoint of the respective dataset,
- for each dataset of the plurality of datasets:
determining whether the input datapoint of the respective dataset and the input datapoints of each one of the further datasets included in the respective sequence respectively fulfill a first neighborhood criterion that is defined in the input space,
- for each dataset of the plurality of datasets:
determining whether the output datapoint of the respective dataset and the output datapoints of each one of the further datasets included in the respective sequence respectively fulfill a second neighborhood criterion that is defined in the output space,
- for each dataset of the plurality of datasets and for each sequence entry of the respective sequence:
determining a respective cumulative fulfillment ratio based on how many of the further datasets included in the sequence up to the respective entry fulfill both the first neighborhood criterion as well as the second neighborhood criterion, and
- determining (3010) a data structure, a dimension of the data structure resolving the sequences determined for each one of the plurality of datasets, a further dimension of the data structure resolving the cumulative fulfillment ratio, each entry of the data structure comprising a count of datapoints that are associated with the respective cumulative fulfillment ratio at the respective sequence entry defined by the position along the dimension and the further dimension,
- accessing (3015) the data structure to assess the machine-learning algorithm.

2. The method of claim 1, wherein said accessing (3015) of the data structure comprises:

- identifying one or more dominant traces (221, 222, 223) of the count of datapoints that are associated with the respective cumulative fulfillment ratios along the dimension and the further dimension,

wherein said assessing of the machine-learning algorithm is based on a shape of each of the one or more dominant traces.

3. The method of claim 2, wherein said assessing of the machine-learning algorithm comprises determining whether the shape of each of the one or more dominant (221, 222, 223) traces coincides with one or more predefined reference shapes (211, 212, 213).

4. The method of claim 3, wherein the one or more predefined reference shapes (211, 212, 213) are selected from the group comprising: flat linear increase; steep linear increase; and hockey stick.

5. The method of claim 3 or 4, wherein the one or more predefined reference shapes (211, 212, 213) are dynamically selected depending on a context.

6. The method of any one of claims 2 to 5, wherein said assessing of the machine-learning is further based on relative intensities of each of the dominant traces (221, 222, 223).

7. The method of any one of claim 6, further comprising:

- determining whether the relative intensities of the dominant traces (221, 222, 223) are within predefined ranges, the predefined ranges depending on a position of the intermediate layer along a processing pipeline of the machine-learning algorithm.

8. The method of any one of the preceding claims, wherein said assessing of the machine-learning algorithm comprises determining a reliability of a prediction of the machine-learning algorithm during inference.

9. The method of any one of the preceding claims, further comprising:

   - depending on said assessing of the machine-learning algorithm, selectively transitioning (3020) a system that is operating based on a prediction of the machine-learning algorithm to a safe state.

10. The method of any one of the preceding claims, further comprising:

    - determining the predefined size of the patches to be equal or smaller than a size of a receptive field of each output datapoint.

11. The method of any one of the preceding claims,
    wherein the intermediate layer is a convolutional layer of a neural network algorithm.

12. The method of any one of the preceding claims,

    wherein the root data is an image,
    wherein the output data is a segmentation mask.

13. The method of any one of the preceding claims, wherein said accessing (3015) of the data structure comprises:

    - selecting one or more entries of the data structure,
    and
    - highlighting, in a representation of the input data, a receptive field associated with the selected entry and optionally outputting, via a graphical user interface, the representation of the input data and the highlighted receptive field.

14. The method of any one of the preceding claims,
    wherein said accessing of the data structure comprises:

    - selecting a patch in a representation of the input data,
    - highlighting, in a plot (200) of the data structure, an entry of the data structure associated with the selected patch.

15. The method of claim 14,

    - determining a subfraction of entries of the data structure that are included in the plot.

16. A computer-implemented method of enabling assessment of processing of a plurality of datasets in a machine-learning algorithm, each dataset of the plurality of datasets comprising a respective input datapoint in an input space and an associated output datapoint in an output space,

    wherein the input datapoints of the plurality of datasets are patches of a predefined size of input data of an intermediate layer of the machine-learning algorithm,
    wherein the input data is obtained by processing root data using an input layer of the machine-learning algorithm and optionally one or more upstream intermediate layers of the machine-learning algorithm,
    wherein the output datapoints of the plurality of datasets are elements of output data associated with an output layer of the machine-learning algorithm and wherein the output datapoints depend on the input datapoints,
    wherein the computer-implemented method comprises:

    - for each dataset of the plurality of datasets:
    determining a respective sequence of a predefined length, the respective sequence including further datasets progressively selected from the plurality of datasets based on a distance of their input datapoints to the input datapoint of the respective dataset,
    - for each dataset of the plurality of datasets:
    determining whether the input datapoint of the respective dataset and the input datapoints of each one of the further datasets included in the respective sequence respectively fulfill a first neighborhood criterion that is defined in the input space,

    - for each dataset of the plurality of datasets:

determining whether the output datapoint of the respective dataset and the output datapoints of each one of the further datasets included in the respective sequence respectively fulfill a second neighborhood criterion that is defined in the output space,
- for each dataset of the plurality of datasets and for each sequence entry of the respective sequence: determining a respective cumulative fulfillment ratio based on how many of the further datasets included in the sequence up to the respective entry fulfill both the first neighborhood criterion as well as the second neighborhood criterion, and
- determining (3010) a data structure, a dimension of the data structure resolving the sequences determined for each one of the plurality of datasets, a further dimension of the data structure resolving the cumulative fulfillment ratio, each entry of the data structure comprising a count of datapoints that are associated with the respective cumulative fulfillment ratio at the respective sequence entry defined by the position along the dimension and the further dimension,
- accessing (3015) the data structure to assess the machine-learning algorithm,

wherein said accessing of the data structure comprises highlighting, in a representation of the input data, a receptive field associated with a selected entry and outputting, via a graphical user interface, the representation of the input data and the highlighted receptive field.

FIG 1

FIG 2

FIG 3

FIG 4

FIG 5

280

282    281

FIG 6

700

Europäisches
Patentamt

European
Patent Office

Office européen
des brevets

# EUROPEAN SEARCH REPORT

Application Number

EP 23 19 8860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DHURANDHAR AMIT ET AL: "Improving Simple Models with Confidence Profiles", ICONFERENCE, 3 December 2018 (2018-12-03), pages 1-11, XP093139248, ISSN: 2331-8422, DOI: 10.48550/arxiv.1807.07506 Retrieved from the Internet: URL:https://proceedings.neurips.cc/paper_files/paper/2018/file/972cda1e62b72640cb7ac702714a115f-Paper.pdf> * page 2, paragraph 3 - paragraph 4; figure 1 * * page 4, paragraph 1 * * page 6, paragraph 6 - paragraph 7 * * page 7, paragraph 3 - paragraph 4; figure 2; table 1 * | 1-16 | INV. G06F18/21 G06N3/0464 G06N5/045 |
| A | Movieclips: "2001: A Space Odyssey (1968) - I'm Sorry, Dave Scene (3/6) ¦ Movieclips", , 31 January 2019 (2019-01-31), XP093136821, Retrieved from the Internet: URL:https://www.youtube.com/watch?v=Wy4EfdnMZ5g [retrieved on 2024-03-01] * the whole document * | 9 | |

TECHNICAL FIELDS
SEARCHED (IPC)

G06F
G06V
G06N

-/--

The present search report has been drawn up for all claims

| Place of search | Date of completion of the search | Examiner |
|---|---|---|
| Munich | 11 March 2024 | Herri, Edmond |

EPO FORM 1503 03.82 (P04C01)

**Europäisches Patentamt**
**European Patent Office**
**Office européen des brevets**

# EUROPEAN SEARCH REPORT

**Application Number**

EP 23 19 8860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Sieberichs Christian ET AL: "ECS — an Interactive Tool for Data Quality Assurance", arXiv.org, 17 July 2023 (2023-07-17), pages 1-8, XP093136813, Ithaca DOI: 10.48550/arxiv.2307.04368 Retrieved from the Internet: URL:https://arxiv.org/pdf/2307.04368.pdf [retrieved on 2024-03-01] * page 2, left-hand column, paragraph 1 * * page 2, right-hand column, paragraph 2 – page 3, right-hand column, paragraph 2 * * page 4, left-hand column, last paragraph – right-hand column, paragraph 1 * | 1-16 | |
| A | GREZMAK JOHN ET AL: "Interpretable Convolutional Neural Network Through Layer-wise Relevance Propagation for Machine Fault Diagnosis", IEEE SENSORS JOURNAL, IEEE, USA, vol. 20, no. 6, 10 December 2019 (2019-12-10), pages 3172-3181, XP011773457, ISSN: 1530-437X, DOI: 10.1109/JSEN.2019.2958787 [retrieved on 2020-02-13] * page 3174, left-hand column, paragraph 2 – page 3175, left-hand column, paragraph 2 * * page 3176, left-hand column, paragraph 2 – right-hand column, paragraph 1; figure 2 * | 1-16 | **TECHNICAL FIELDS SEARCHED (IPC)** |

The present search report has been drawn up for all claims

| Place of search | Date of completion of the search | Examiner |
|---|---|---|
| Munich | 11 March 2024 | Herri, Edmond |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WASCHULZIK, THOMAS**. Qualitatsgesicherte effiziente Entwicklung vorwärtsgerichteter künstlicher Neuronaler Netze mit überwachtem Lernen: (QUEEN). 1999